# DEMANDE DE BREVET EUROPEEN

(11) **EP 1 495 736 A1**
(43) Date de publication de la demande: **12.01.2005**
(21) Numéro de dépôt: 04447163.9
(22) Date de dépôt: 05.07.2004
(51) Int. Cl.: A61C 5/02

(54) **Dispositif et procédé de rangement pour limes d'endodontie**

(30) Priorité: 09.07.2003 BE 200300397
(71) Demandeur: Peeters, Jean, 4577 Modave (BE)
(72) Inventeur: Peeters, Jean, 4577 Modave (BE)
(74) Mandataire: Van Malderen, Michel

(57) **Abrégé**

La présente invention se rapporte à un séquenceur pour le rangement d'instruments d'endodontie (4), muni d'éléments en mousse synthétique dans laquelle peuvent être piqués lesdits instruments, caractérisé en ce que le séquenceur comprend un support (1), muni d'un pied (12), sur lequel on a été glissé en la déformant une pluralité de manchons (21,22,...,26) de ladite mousse ayant une forme de départ essentiellement cylindrique, ledit support et ladite mousse étant capables de résister à une température d'au moins 150 °C, et de préférence 200 °C.

## Description

### Objet de l'invention

La présente invention se rapporte à un dispositif destiné à faciliter le rangement d'instruments d'endodontie pendant et après utilisation ainsi que pour le nettoyage et la stérilisation de ceux-ci.

L'invention se rapporte également au procédé de mise en oeuvre du dispositif.

### Etat de la technique

L'endodontie est l'art de traiter les racines des dents. En cas d'infection du tissu pulpaire, on procède à un nettoyage et à une obturation des canaux radiculaires pour éliminer l'infection : c'est l'opération dite de dévitalisation de la dent.

La désinfection et la mise en forme canalaire sont des étapes très importantes de l'acte endodontique. On connaît des instruments rotatifs appelés limes (en anglais, *reamers)* permettant d'une part d'accéder aux canaux radiculaires contenant le nerf de la dent et d'autre part d'aléser ces canaux.

Ainsi le praticien est amené à utiliser, au cours d'une intervention de ce type, une séquence de limes de formes, diamètres et longueurs différents.

Dans les dernières années, on a vu apparaître une nouvelle génération d'instruments en alliage à base de nickel-titane dits "à mémoire de forme". Ces instruments, caractérisés par une très grande flexibilité, ont la faculté de pouvoir, sans casser, épouser la forme courbe du canal radiculaire tout en effectuant leur mouvement avec une vitesse de rotation réduite à quelques centaines de tours par minute, pour limiter la fatigue instrumentale en flexion. Ainsi, la superélasticité de cet alliage procure aux limes une limite pour la déformation plastique et la rupture nettement supérieure à celle des aciers. Toujours en raison du risque de fracture, les normes d'utilisation préconisent un renouvellement de ces instruments après 5 ou 6 interventions.

Après une utilisation, les instruments d'endodontie sont généralement déposés en les piquant sur une éponge, c'est-à-dire un bloc de mousse de forme souvent ronde ou ovale. Ces éponges sont soit à usage unique, soit encore sont conçues pour être nettoyées et passées en autoclave.

En fin de journée, l'assistant doit procéder au nettoyage des instruments et à leur stérilisation. La stérilisation peut être réalisée par la chaleur humide au moyen de vapeur saturée et sous pression (autoclave), par la chaleur sèche (four) ou éventuellement à froid au moyen d'un désinfectant (oxyde d'éthylène) ou de rayonnement gamma. La stérilisation en autoclave est préférée pour des raisons d'efficacité, de rapidité et de consommation d'énergie. Une durée de 20 minutes en autoclave à 120 °C est suffisante pour détruire les spores bactériennes. Toutefois, le temps d'application et la température peuvent être augmentés, par exemple avec un maximum de 20 minutes à 134 °C.

A cette fin, de nombreux types de boîtes de rangement existent sur le marché. Par exemple, on connaît des boîtes en inox et/ou polymère résistant aux hautes températures comportant un support perforé pour accueillir les limes.

Cependant, malgré l'existence d'un code de couleurs pour les différents types de limes existant sur le marché, la gestion des instruments en cours d'utilisation et/ou usagés est rendue particulièrement compliquée au vu de la combinaison du grand nombre de limes utilisé et de l'usage limité qui peut être fait de chaque lime. Par exemple, on a imaginé des boîtes de rangement et stérilisation pourvues d'un index numérique qui peut être incrémenté par l'utilisateur au fil des utilisations.

Il existe aussi des limes pourvues de pétales en plastique. Après utilisation, on enlève un ou deux pétales pour indiquer une usure plus ou moins importante.

Les limes se présentent sous la forme d'un "set" complet, chaque lime portant une couleur conventionnelle. La séquence des couleurs conventionnelles selon le diamètre de la lime est : blanc, jaune, rouge, bleu, vert, noir. Chaque fois qu'un patient est traité, le set complet est susceptible d'être utilisé et repiqué dans un bloc de mousse après usage. En fin de journée, l'assistant fait le transfert de la mousse vers la boîte susmentionnée, en nettoyant chaque instrument individuellement, la boîte étant ensuite placée dans le stérilisateur. Cette série d'opérations est très fastidieuse, surtout si l'on veut garder les différentes limes dans un ordre déterminé.

### Buts de l'invention

La présente invention vise à fournir une solution qui permette de s'affranchir des inconvénients de l'état de la technique.

Un but complémentaire de l'invention est de fournir une solution qui permette d'optimiser l'identification et le rangement d'un ensemble de limes d'endodontie lors de l'utilisation, du nettoyage et de la stérilisation de ces limes.

Un autre but de l'invention est de fournir une solution qui permette d'optimiser et d'individualiser la gestion d'un ensemble de limes d'endodontie en fonction de leur utilisation, conformément aux normes en vigueur.

### Principaux éléments caractéristiques de l'invention

La présente invention se rapporte à un séquenceur pour le rangement d'instruments d'endodontie, muni d'éléments en mousse synthétique dans laquelle peuvent être piqués lesdits instruments, caractérisé en ce que ledit séquenceur comprend un support, muni d'un pied, sur lequel on a glissé en la déformant une pluralité de manchons de ladite mousse ayant une forme de départ essentiellement cylindrique, ledit support et ladite mousse étant capables de résister à une température d'au moins 150°C, et de préférence 200 °C.

Avantageusement, ladite mousse comprend un élastomère silicone et/ou un fluoroélastomère, tandis que le support est un support métallique, de préférence en aluminium ou acier inoxydable, ou plastique à tenue en haute température, de préférence supérieure à 150 °C et de préférence encore supérieure à 200 °C.

De préférence encore, le support est réalisé dans un plastique technique obtenu par injection thermoplastique ou thermodurcissable, tel que le PEEK (Polyaryletheretherketone), le LCP (Polyester Liquid Crystal Polymer), le PEI (Polyetherimid), le PPA (Polyphtalamide), le polyimide, le polyamide ou le polysulfone.

Toujours selon l'invention, le support est un cadre ou un bloc parallélépipédique creux ouvert au moins sur sa face supérieure et inférieure, de section rectangulaire et lesdits manchons sont fixés sur le support par étirement et rétraction pour adopter, en position fixée, essentiellement la même forme que le support.

Selon une autre forme d'exécution, le support est un cylindre creux, au moins ouvert sur une partie supérieure et inférieure de sa surface latérale et lesdits manchons sont positionnés sur le support par étirement et rétraction.

Avantageusement, la face avant du support comporte une réglette graduée, de préférence en mm.

Selon une autre forme d'exécution préférée de l'invention, le support est disposé sur un pied de manière telle qu'un emplacement pour un manchon soit prévu de part et d'autre du pied.

Le séquenceur de l'invention comprend au moins 2 et de préférence 6 manchons.

De préférence, les manchons présentent des couleurs différentes, de préférence selon la séquence des couleurs conventionnelles en endodontie (blanc, jaune, rouge, bleu, vert, noir).

Ainsi, le dispositif de l'invention peut, non seulement être utilisé comme séquenceur en tant que tel, mais également comme trousse de rangement de limes d'endodontie, en particulier en se basant sur le code de couleurs conventionnel.

Un autre aspect de la présente invention concerne un procédé de mise en oeuvre du séquenceur d'endodontie décrit ci-dessus, caractérisé par les étapes suivantes :
- préalablement au soin dentaire, le séquenceur a été stérilisé dans un stérilisateur à chaleur sèche, de préférence à une température d'au moins 150 °C pendant 2 heures ou dans un stérilisateur à chaleur humide (autoclave), de préférence à une température d'au moins 120 °C pendant 20 minutes et présente au moins un instrument d'endodontie piqué sur le manchon d'ordre n (n ≥ 1) ;
- l'instrument est enlevé en vue de prodiguer le soin dentaire ;
- après le soin, l'instrument est repiqué sur le manchon d'ordre n et nettoyé sur ce manchon ou en dehors de celui-ci ;
- après nettoyage, l'instrument est piqué sur le manchon d'ordre n+1 ou n+2, selon l'usure ;
- le séquenceur muni de ses instruments est passé au stérilisateur ;
- les instruments se trouvant avant le soin sur le manchon de dernier numéro d'ordre sont de préférence éliminés après le soin.

### Brève description des figures

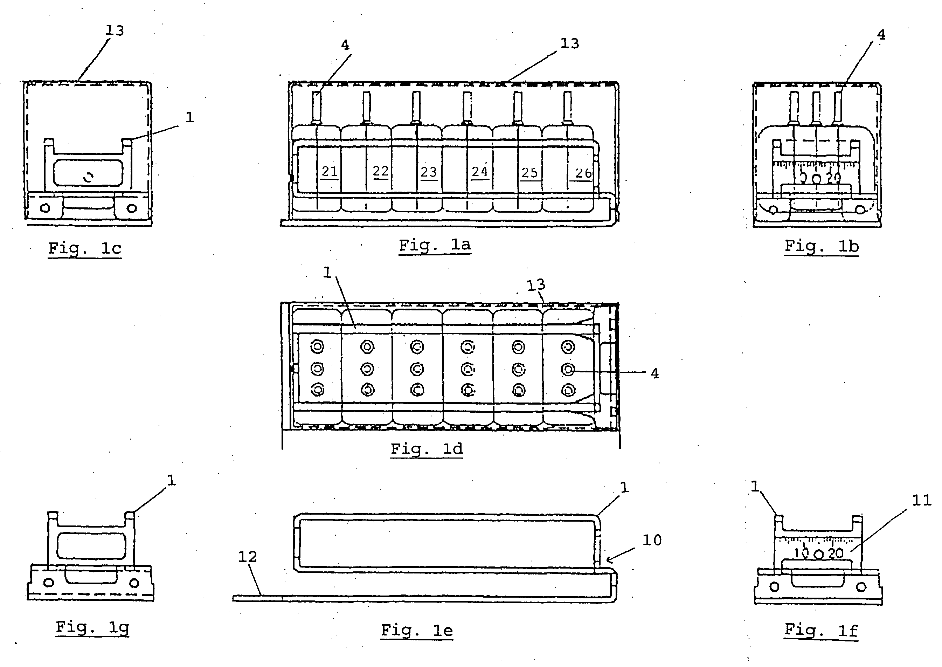

Les figures 1.a à 1.g représentent schématiquement et respectivement des vues d'un séquenceur complet à 6 positions en élévation (latérale, de l'avant, de l'arrière) et des vues du pied support en élévation (latérale, de l'avant, de l'arrière) selon une première forme d'exécution préférée de la présente invention.

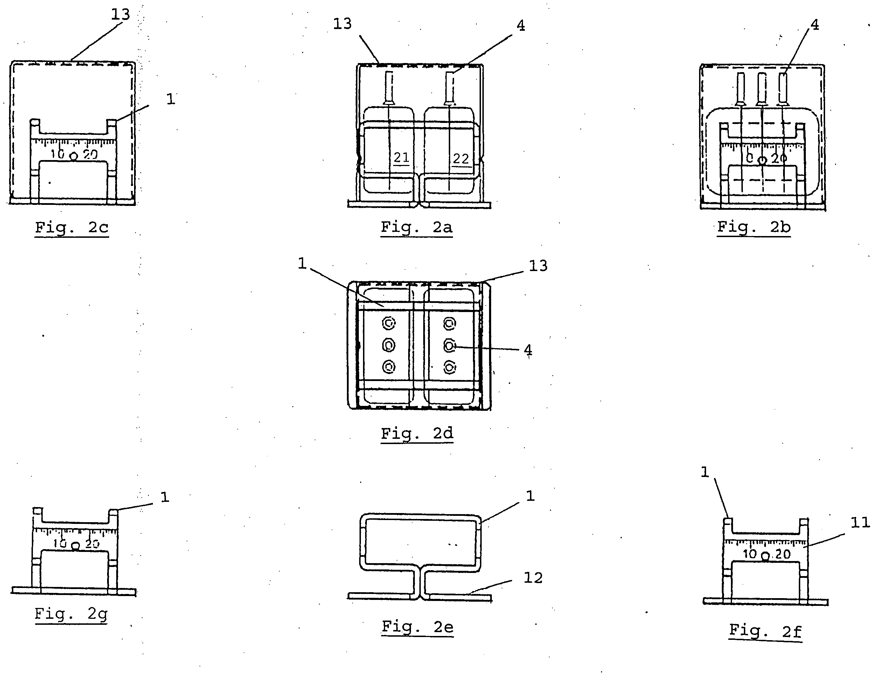

Les figures 2.a à 2.g représentent schématiquement et respectivement des vues d'un séquenceur complet à 2 positions en élévation (latérale, de l'avant, de l'arrière) et des vues du pied support en élévation (latérale, de l'avant, de l'arrière) selon une deuxième forme d'exécution préférée de la présente invention.

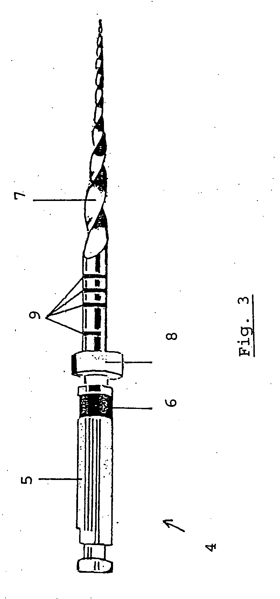

La figure 3 représente schématiquement un modèle de lime d'endodontie en Ni-Ti.

Dans les figures, les éléments identiques, similaires ou apparentés seront représentés par des symboles de référence identiques ou ayant une partie numérique commune.

### Description de formes d'exécution préférées de l'invention

Une forme d'exécution préférée de la présente invention est schématisée aux figures 1.a à 1.g.

Selon l'invention, on utilise un séquenceur pour le rangement des outils d'endodontie selon un ordre déterminé en fonction par exemple du nombre d'utilisations desdits outils. Le séquenceur comprend un bloc ou cadre 1 en métal (inox, aluminium, etc.) ou en plastic dur. Dans ce dernier cas, vu les impératifs de la stérilisation, il est nécessaire de recourir à des plastiques techniques généralement obtenus par injection thermoplastique ou thermodurcissable, conçus pour le non-jetable et ayant à la fois une tenue à haute température (au moins 150 °C, et souvent à plus de 200 °C) et des propriétés antibactériennes.

Des exemples de tels matériaux utilisés dans le domaine médical et qualifiés pour la stérilisation sont le PEEK (Polyaryletheretherketone), le LCP (Polyester Liquid Crystal Polymer), le PEI (Polyetherimid), le PPA (Polyphtalamide), le polyimide, le polyamide, le polysulfone, etc.

Le bloc ou cadre se présente sous la forme d'un parallélépipède rectangle, dont la surface latérale est rendue totalement accessible par fixation d'un pied 12 à l'une de ses extrémités 10 (en ce sens que le bloc ne repose pas sur l'une de ses faces latérales). Le dispositif peut être complété par un couvercle de protection amovible 13.

Le séquenceur est monté en enfilant sur le parallélépipède une pluralité d'éléments ou manchons prédécoupés de mousse 21,22,...,26 (six manchons) telle qu'une mousse en élastomère silicone extrudé et moulé. Pour pouvoir adopter la forme d'une section rectangulaire, la mousse doit être étirée, par exemple manuellement, avant son placement sur le bloc support 1. Après placement, elle se rétracte en adoptant la forme de la section carrée ou rectangulaire du support, ce qui assure sa fixation.

Avantageusement, les manchons peuvent être réalisés dans une mousse colorée et, de préférence encore, le dispositif de l'invention peut présenter les 6 manchons dans les six couleurs conventionnelles des limes d'endodontie (voir ci-dessus), ce qui permet dès lors également d'utiliser le séquenceur comme simple dispositif de rangement des outils d'endodontie, en fonction de leur couleur, c'est-à-dire leur taille ou leur type.

La lime type d'endodontie 4 en Ni-Ti, représentée à la figure 3, se compose d'un manche 5 portant un code de couleur 6, caractéristique de la taille de la lime, et de la partie coupante proprement dite 7, à profil très caractéristique présentant des conicités multiples et progressives. Un anneau butoir coulissant 8, par exemple également en caoutchouc de silicone ou en plastique, en combinaison avec des repères 9, permet de visualiser et sécuriser la profondeur de pénétration maximale dans le canal radiculaire.

Avantageusement, la mousse élastomère silicone utilisée dans le cadre de la présente invention résiste à une température d'au moins 200 °C.

Il est à noter que le support 1 doit être creux, au moins au niveau de ses faces supérieure et inférieure, afin de pouvoir piquer les instruments de part en part dans le manchon de mousse 21,22,...,26.

La section rectangulaire avant du bloc en métal ou plastique dur 1 (figure 1.f) peut être pourvue d'une réglette présentant des graduations 11 en mm permettant à l'utilisateur de sélectionner une lime ou sa longueur utile en fonction du canal radiculaire particulier à aléser.

Selon l'invention, les instruments ne doivent plus quitter le support pour le nettoyage et la stérilisation. En effet, un séquenceur est associé à un seul et unique set d'instruments, qui ne pourra être utilisé que pour un seul patient entre deux stérilisations.

Le séquenceur peut être utilisé de la manière suivante. En début de journée, le séquenceur est préparé pour le soin dentaire de manière telle que, par exemple, tous les manchons sont vides sauf le premier manchon 21 qui contient un set complet d'instruments neufs. Pendant le soin, après usage d'un instrument particulier et avant de continuer le soin avec un nouvel instrument, le praticien replace le premier sur le même manchon du séquenceur, donc toujours sur le premier manchon 21. Après le soin, les instruments, qui ont été utilisés, sont nettoyés et placés sur le manchon suivant 22. Le séquenceur est alors prêt pour la stérilisation. Ainsi, le praticien saura ultérieurement que les instruments qui se trouvent sur le manchon 22 ont déjà été utilisés une fois.

Typiquement, mais non obligatoirement, tous les instruments se trouvant au départ sur le premier manchon seront déplacés comme décrit ci-dessus suite au soin. Le premier manchon, se retrouvant vide, peut dans ce cas être enlevé du séquenceur, éventuellement pour nettoyage et récupération et remplacé par un manchon neuf et propre, ou non.

Même dans le cas de l'utilisation du dispositif de l'invention comme séquenceur, il est avantageux de pourvoir celui-ci de manchons de couleurs toutes différentes, afin de bien distinguer les différents manchons.

Lors du soin dentaire, un instrument qui se trouvait en position 1 peut être placé en position 3 (manchon 23), si cet instrument a particulièrement souffert lors du soin.

Normalement, après le soin, le séquenceur ne pourra plus être utilisé dans la journée, sans nettoyage et stérilisation. Après stérilisation, le praticien pourra prodiguer un nouveau soin dentaire, par exemple le lendemain et il procédera de la manière décrite ci-dessus. Par exemple, on pourra très bien utiliser un instrument se trouvant en position 2, car le séquenceur a nécessairement été stérilisé auparavant.

De la manière la plus générale, avant d'utiliser un set d'instruments positionnés sur le séquenceur, le praticien saura, simplement de par la position respective de ceux-ci, combien de fois chaque instrument a déjà été utilisé. Dans l'exemple considéré ici, chaque instrument a été utilisé 6 fois, dans le cas d'un usage normal, lorsqu'il se retrouve en dernière position du séquenceur, c'est-à-dire sur le manchon 26. Le praticien sait qu'il doit jeter, après le soin, l'(les) instrument(s) se trouvant dans cette position.

Selon une autre forme d'exécution préférée de l'invention représentée schématiquement aux figures 2.a à 2.g, un cadre support 1, par exemple en inox ou plastique technique dur haute température est disposé sur un pied 12 tel qu'il présente, de chaque côté du pied, une position permettant d'accueillir un manchon en mousse 21,22, comme décrit ci-dessus. Cette forme d'exécution, plus compacte, présente un encombrement réduit plus adapté pour la stérilisation. Avantageusement les outils utilisés pourront être déplacés d'un manchon à l'autre par le praticien, en fonction de leur utilisation. En particulier, si une couleur conventionnelle (blanc, jaune, rouge, etc.) est associée au nombre d'utilisations effectives d'un outil (jusqu'à 6), le praticien connaîtra à tout moment l'état d'usure de ses limes. Si l'on se réfère au procédé d'utilisation du séquenceur décrit ci-dessus, par exemple pour un séquenceur à 2 positions présentant au départ un manchon blanc et un manchon jaune, une fois que toutes les limes auront été placées sur le manchon jaune pour stérilisation, libérant ainsi le manchon blanc, ce dernier peut être remplacé par un manchon rouge, pour la prochaine étape, et ainsi de suite.

## Revendications

1. Séquenceur pour le rangement d'instruments d'endodontie (4), muni d'éléments en mousse synthétique dans laquelle peuvent être piqués lesdits instruments, **caractérisé en ce que** ledit séquenceur comprend un support (1), muni d'un pied (12), sur lequel on a glissé en la déformant une pluralité de manchons (21,22,...,26) de ladite mousse ayant une forme de départ essentiellement cylindrique, ledit support et ladite mousse étant capables de résister à une température d'au moins 150 °C, et de préférence 200 °C.

2. Séquenceur selon la revendication 1, **caractérisé en ce que** ladite mousse comprend un élastomère silicone et/ou un fluoroélastomère.

3. Séquenceur selon la revendication 1 ou 2, **caractérisé en ce que** le support (1) est un support métallique ou plastique à tenue en haute température, de préférence supérieure à 150 °C et de préférence encore supérieure à 200 °C.

4. Séquenceur selon la revendication 3, **caractérisé en ce que** le support (1) est en aluminium ou en acier inoxydable.

5. Séquenceur selon la revendication 3, **caractérisé en ce que** le support (1) est réalisé dans un plastique technique obtenu par injection thermoplastique ou thermodurcissable, tel que le PEEK (Polyaryletheretherketone), le LCP (Polyester Liquid Crystal Polymer), le PEI (Polyetherimid), le PPA (Polyphtalamide), le polyimide, le polyamide ou le polysulfone.

6. Séquenceur selon l'une quelconque des revendications précédentes, **caractérisé en ce que** le support (1) est un cadre ou un bloc parallélépipédique creux ouvert au moins sur sa face supérieure et inférieure, de section rectangulaire et **en ce que** lesdits manchons (21,22,...,26) sont fixés sur le support par étirement et rétraction pour adopter, en position fixée, essentiellement la même forme que le support.

7. Séquenceur selon l'une quelconque des revendications 1 à 5, **caractérisé en ce que** le support est un cylindre creux, au moins ouvert sur une partie supérieure et inférieure de sa surface latérale et **en ce que** lesdits manchons (21,22,...,26) sont positionnés sur le support par étirement et rétraction.

8. Séquenceur selon l'une quelconque des revendications précédentes, **caractérisé en ce que** la face avant du support (11) comporte une réglette graduée, de préférence en mm.

9. Séquenceur selon l'une quelconque des revendications précédentes, **caractérisé en ce que** le support (1) est disposé sur un pied (12) de manière telle qu'un emplacement pour un manchon soit prévu de part et d'autre du pied.

10. Séquenceur selon l'une quelconque des revendications précédentes, **caractérisé en ce qu'**il comprend au moins 2 (21,22) et de préférence 6 manchons (21,22,...,26).

11. Séquenceur selon la revendication 10, **caractérisé en ce que** les manchons présentent des couleurs différentes, de préférence selon la séquence des couleurs conventionnelles en endodontie (blanc, jaune, rouge, bleu, vert, noir).

12. Procédé de mise en oeuvre du séquenceur d'endodontie selon l'une quelconque des revendications précédentes, **caractérisé par** les étapes suivantes :
- préalablement au soin dentaire, le séquenceur a été stérilisé dans un stérilisateur à chaleur sèche, de préférence à une température d'au moins 150 °C pendant 2 heures ou dans un stérilisateur à chaleur humide (autoclave), de préférence à une température d'au moins 120°C pendant 20 minutes et présente au moins un instrument d'endodontie piqué sur le manchon d'ordre n (n ≥ 1) ;
- l'instrument est enlevé en vue de prodiguer le soin dentaire ;
- après le soin, l'instrument est repiqué sur le manchon d'ordre n et nettoyé sur ce manchon ou en dehors de celui-ci ;
- après nettoyage, l'instrument est piqué sur le manchon d'ordre n+1 ou n+2, selon l'usure ;
- le séquenceur muni de ses instruments est passé au stérilisateur ;
- les instruments se trouvant avant le soin sur le manchon de dernier numéro d'ordre sont de préférence éliminés après le soin.

13. Utilisation d'un séquenceur selon l'une quelconque des revendications 1 à 11, pour le rangement de limes d'endodontie, en particulier sur base du code de couleurs conventionnel.
